# EUROPEAN PATENT APPLICATION

(11) **EP 1 303 138 A2**
(43) Date of publication of application: **16.04.2003**
(21) Application number: 02292434.4
(22) Date of filing: 03.10.2002
(51) Int. Cl.: H04N 7/16

(54) **Method and system for enabling program blocking**

(30) Priority: 05.10.2001 US 972493
(71) Applicant: Thomson Licensing S.A., 92100 Boulogne-Billancourt (FR)
(72) Inventor: Johnson, Michael Wayne, Indianapolis, IN 46236 (US)
(74) Representative: Berthier, Karine

(57) **Abstract**

A method and system for enabling program blocking provides advantages over conventional parental controls. According to an exemplary embodiment, a system such as a television signal receiver enables a user to designate a title of a program to be blocked. Program blocking is performed by preventing display of a video portion of the program, and further preventing display of the program title in a given display region, such as an electronic program guide and/or a channel banner. An audio portion of the program may also be blocked. A user may remove the program blocking function by, for example, inputting a predetermined password.

## Description

### BACKGROUND OF THE INVENTION

### 1. Field of the Invention

The present invention generally relates to parental controls in systems such as a television signal receiver, and more particularly, to a method and system which enables improved program blocking.

### 2. Description of the Related Art

It has become increasingly important to control the television and video viewing activities of children, especially at times when personal parental supervision cannot be provided. Ideally, parents and children should agree upon ground rules regarding viewing activities, such as the times, channels and types of programs that the children can watch. However, even with such an agreement, reality suggests that its enforcement may be difficult, if not impossible. This can be quite troubling for parents, especially busy working parents.

To address this issue, parental control is presently available in certain video systems. In these systems, certain programs having rating levels in excess of pre-set levels designated by a user may be blocked from viewing. These ratings may be based on the well-known MPAA rating system (e.g., G, PG, R ratings) or another established rating system (e.g., EIA-766). Devices using these rating systems typically rely on the rating assigned to a program by a committee. These assigned ratings may therefore be somewhat subjective. Accordingly, some parents may find certain programs to be objectionable even though the assigned rating does not exceed a certain level. In these cases, they may wish to block a program based on other criteria, such as the program's title.

Even if other criteria are used to block programming, some children may attempt to circumvent the blocking process. For example, a child may be aware that his or her parents have blocked a particular program the child wants to view. To circumvent the blocking process, the child may simply look up when the program is being aired via the on-screen program guide of the television system. The child may then attempt to view the program from another location, such as at a friend or neighbor's home, where the program block is not in effect. Accordingly, it is desirable for parents to block objectionable programs, and also to prevent children from determining if and when blocked programs are being aired. The present invention addresses these and other problems.

### SUMMARY OF THE INVENTION

The present invention provides an improved method and system for enabling program blocking. According to an exemplary embodiment, a system such as a television signal receiver enables a user to designate a title of a program to be blocked. Program blocking is performed by preventing display of a video portion of the program, and modifying the display of information associated with the program that is intended for display, e.g., an on-screen display (OSD) of the program title, program theme, description of the program content, etc., in a given display region, such as an electronic program guide and/or a channel banner. An audio portion of the program may also be blocked. A user may remove the program blocking function by, for example, inputting a predetermined password.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a schematic diagram of an exemplary system suitable for implementing the present invention;
FIG. 2 is a flowchart illustrating exemplary steps for practicing the present invention;
FIG. 3 is an exemplary display of an on-screen electronic program guide;
FIG. 4 is an exemplary display of the on-screen electronic program guide of FIG. 3 employing program blocking according to principles of the present invention;
FIG. 5 is an exemplary display of a channel including its channel banner;
FIG. 6 is an exemplary display of the channel and banner of FIG. 5 employing program blocking according to principles of the present invention and;
FIG. 7 is a flowchart illustrating exemplary steps for practicing another embodiment of the invention.

Like reference numbers throughout the drawings indicate the same or similar elements. The exemplifications set out herein illustrate preferred embodiments of the invention, and such exemplifications are not to be construed as limiting the scope of the present invention in any manner.

### DETAILED DESCRIPTION OF THE INVENTION

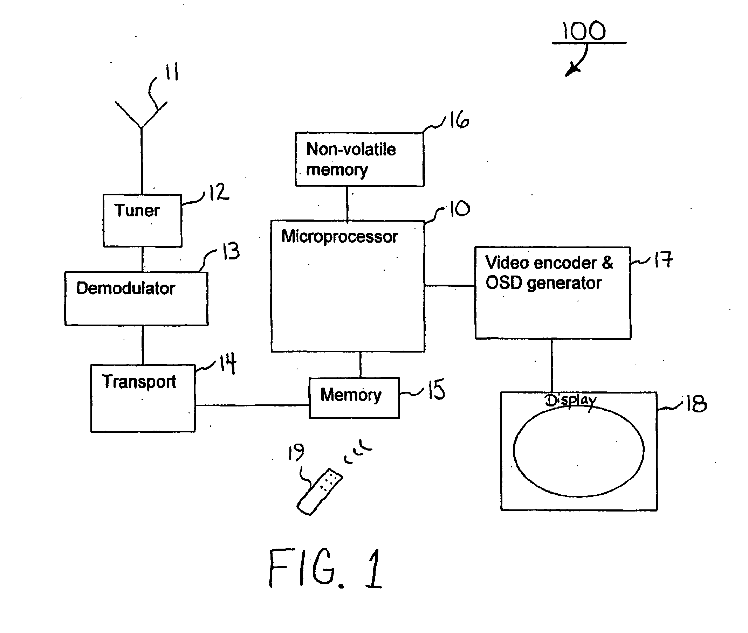

Referring now to the drawings, and more particularly to FIG. 1, a schematic diagram of an exemplary system suitable for implementing the present invention is shown. For purposes of explanation and example, the system of FIG. 1 is a digital system. However, as will be discussed herein, the present invention can also be practiced in an analog system. In FIG. 1, a system 100 includes a microprocessor 10 for controlling various system functions such as blocking restricted programs and enabling generation of an on-screen electronic program guide (EPG) and other displays. An antenna 11 receives digital signals broadcast via satellite, terrestrial or other means of transmission. The received digital signals may be embodied as individual packets of digital data. A tuner 12 provides a tuning function enabling the system 100 to effectively receive signals of a particular frequency or range of frequencies. A demodulator 13 receives and demodulates the signals provided from the tuner 12 to provide demodulated signals. A transport 14 demultiplexes the demodulated signals to produce an output signal. The tuner 12, demodulator 13 and transport 14 operate under the control of the microprocessor 10 to produce a desired signal for display purposes. In the exemplary digital system 100 of FIG. 1, this desired signal may be embodied as packets of digital data. A memory 15 stores this data under the control of the microprocessor 10. Some of this stored data may be electronic program guide (EPG) data, or other types of video and/or audio data. A non-volatile memory 16 stores data such as a list of one or more program titles that a user wants to block under the control of the microprocessor 10. A video encoder and on-screen display (OSD) generator 17 operates under the control of the microprocessor 10 to encode data and generate an on-screen display (OSD). A display terminal 18 provides on-screen display of visual images, such as an on-screen electronic program guide (EPG) and/or a channel banner for providing an OSD of program-related information, such as program title, in dependence upon data signals provided by the video encoder and on-screen display (OSD) generator 17. An input terminal 19, such as an infrared remote control, provides a keypad through which a user can provide inputs to the system 100. According to an exemplary embodiment, such inputs may be alphabetic, numeric or any other type of input. While the system 100 of FIG. 1 is shown as a digital system for purposes of example and explanation, it is contemplated that the present invention can also be practiced in an analog system where electronic program guide (EPG) data is received in an auxiliary portion of a television signal such as the vertical blanking interval (VBI).

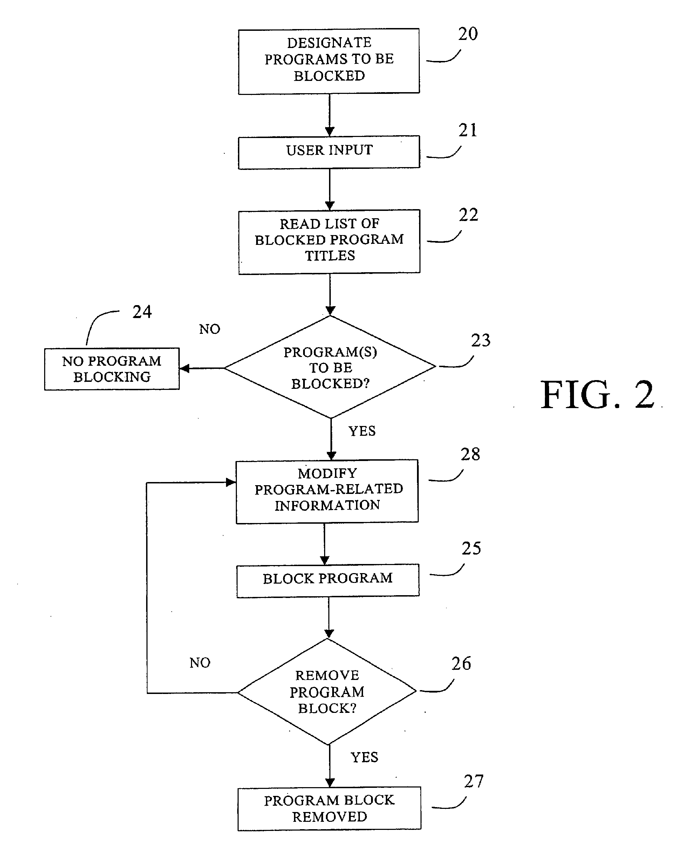

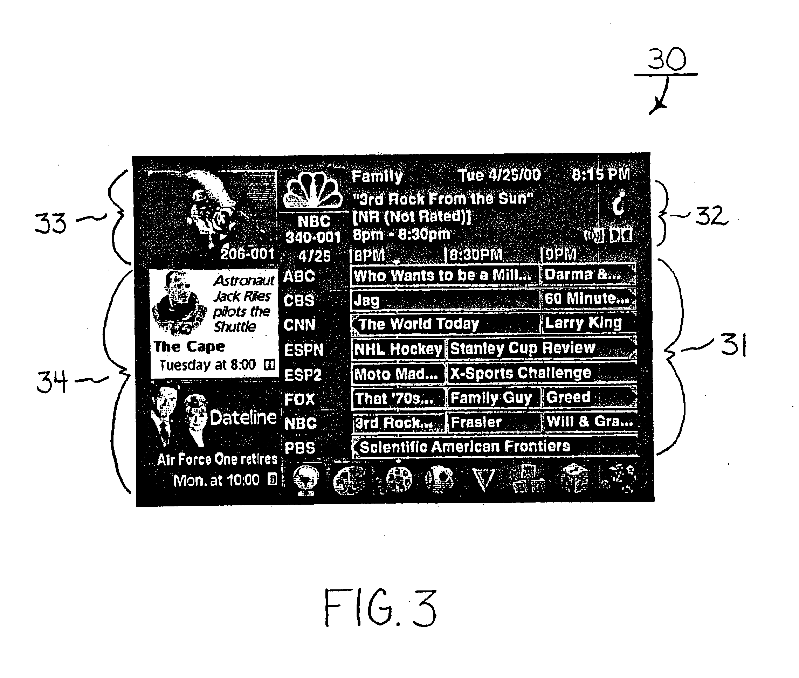

Referring now to FIG. 2, a flowchart illustrating exemplary steps for practicing the present invention is shown. For purposes of explanation and example only, the flowchart of FIG. 2 will be described in relation to the system 100 of FIG. 1 and the exemplary displays of FIGS. 3 through 6.

At step 20, a user designates one or more programs to be blocked according to principles of the present invention. This step may be performed in a variety of different ways. For example, the user may manipulate the input terminal 19 to navigate through an on-screen electronic program guide (EPG) displayed on the display terminal 18 to select one or more programs to be blocked. FIG. 3 illustrates an exemplary on-screen electronic program guide (EPG) 30 suitable for use in practicing the present invention.

As shown in FIG. 3, the exemplary on-screen electronic program guide (EPG) 30 includes a program listing portion 31 which illustrates programs scheduled to be aired during given time periods. In performing step 20 of FIG. 2, a user may manipulate the input terminal 19 of FIG. 1 to navigate through the program listing portion 31 and select a given program. According to an exemplary embodiment, a user presses buttons on the input terminal 19 causing a highlighted cursor to move (e.g., up, down, right, left) within the program listing portion 31 and highlight a given program. Once a program is highlighted, the user may press another button on the input terminal 19 to select the program as a program to be blocked. While a given program is highlighted, specific details regarding that program such as title, program rating and air time may be displayed in a program information portion 32 of the electronic program guide (EPG) 30. As indicated in FIG. 3, a program entitled *"3*^{*rd*} *Rock From the Sun"* having no rating and a scheduled air time on NBC from 8:00 pm to 8:30 pm on 4/25/00 is highlighted. The exemplary on-screen electronic program guide (EPG) 30 of FIG. 3 also includes a picture-in-picture (PIP) portion 33 and a program advertisement portion 34.

Referring back to FIG. 2, according to another embodiment, the user may perform step 20 by providing alphabetic and/or numeric inputs via input terminal 19 to designate the title of a program to be blocked. Regardless of the program designation technique employed, a list of the one or more designated program titles to be blocked is stored in the non-volatile memory 16 under the control of the microprocessor 10.

Next, at step 21, a user provides an input to the system 100 via input terminal 19. According to an exemplary embodiment, the user provides an input requesting display of an on-screen electronic program guide (EPG), such as the one shown in FIG. 3. According to another embodiment, the user provides an input requesting display of a particular channel. This request may include display of other OSD information such as the channel's banner. Further details regarding channel banners will be provided later herein.

In response to the user input at step 21, the microprocessor 10 reads the list of one or more blocked program titles from the non-volatile memory 16 at step 22. These program titles correspond to the one or more programs designated at step 20. Next, at step 23, the microprocessor 10 determines whether or not a program blocking function is to be performed. Step 23 may be performed differently depending upon the user input provided at step 21. For example, if the user input at step 21 requests display of the on-screen electronic program guide (EPG), then step 23 is performed by the microprocessor 10 determining whether the title of each program to be included in the requested on-screen electronic program guide (EPG) stored in the memory 15 exists in the list of blocked program titles read from the non-volatile memory 16. In other words, the microprocessor 10 determines whether any of the program titles included in the requested electronic program guide (EPG) correspond to blocked programs.

Alternatively, if the user input at step 21 requests display of a particular channel, then step 23 is performed by the microprocessor 10 reading the electronic program guide (EPG) stored in the memory 15 to determine whether or not the title of the program currently being aired on the requested channel exists in the list of blocked program titles read from the non-volatile memory 16. In other words, the microprocessor 10 determines whether the requested channel is currently airing a blocked program.

In the case where a user has requested display of an on-screen electronic program guide (EPG) at step 21, if the microprocessor 10 determines at step 23 that none of the program titles included in the requested electronic program guide (EPG) correspond to blocked programs, then process flow advances to step 24 and no program blocking function is performed. In this case, the requested on-screen electronic program guide (EPG) may be displayed on the display terminal 18 with all of its program titles, and all such programs are viewable without restriction. FIG. 3 illustrates an example of this situation.

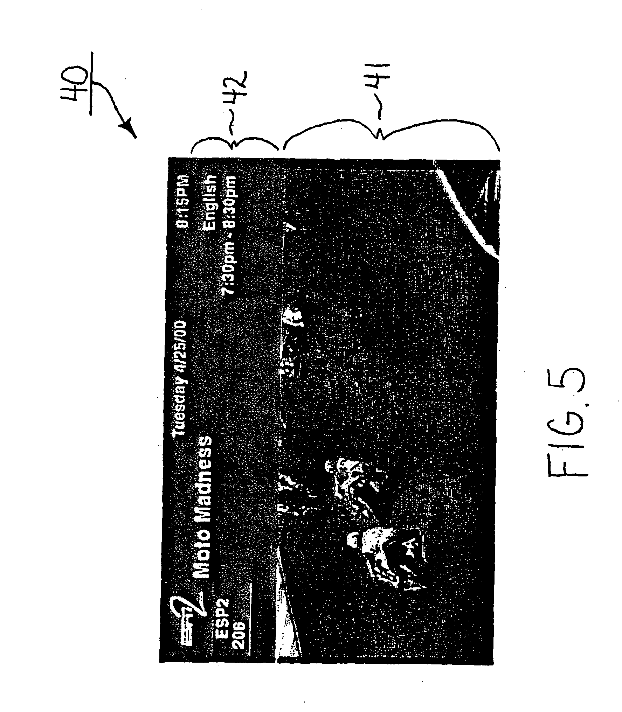

In the case where a user has requested display of a particular channel at step 21, if the microprocessor 10 determines at step 23 that the requested channel is not currently airing a program to be blocked, then process flow advances to step 24 and no program blocking function is performed. In this case, the requested channel and its associated banner may be displayed on the display terminal 18. FIG. 5, which will be described later herein, illustrates an example of this situation.

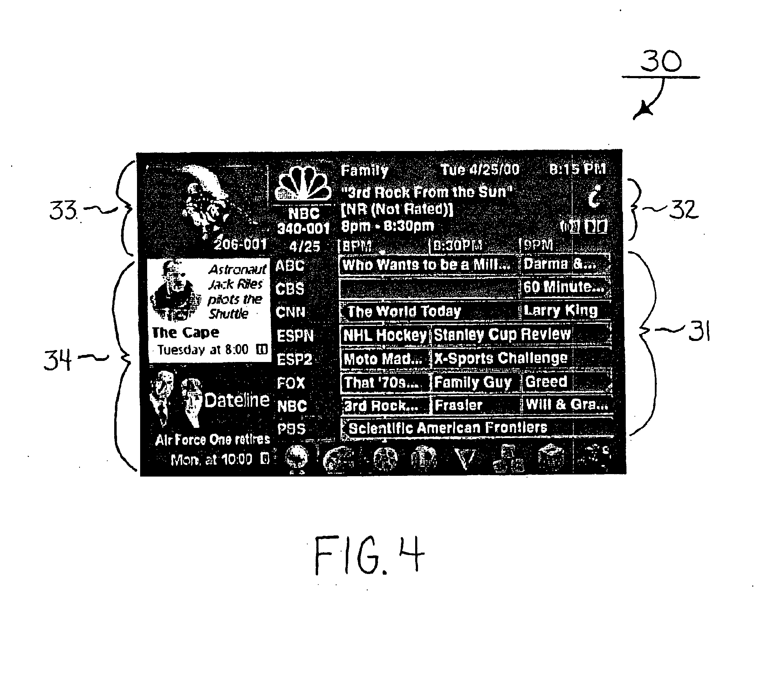

There may be situations, however, where a user's input at step 21 requests display of a program and/or program information designated for blocking. In these instances, process flow advances to step 25 where the microprocessor 10 enables a program blocking function. In the event that a user's input at step 21 requests display of an on-screen electronic program guide (EPG) that includes a program title to be blocked, the microprocessor 10 performs steps 25 and 28. In step 28, microprocessor 10 modifies program-related information that is intended for display, such as an EPG and/or other OSD (e.g., channel banner). More specifically, in the case of an EPG, microprocessor 10 causes the electronic program guide (EPG) to be displayed on the display terminal 18 with the title(s) of the blocked program(s) removed. Moreover, at step 25, the video and/or audio portions of the programs whose titles are removed from the electronic program guide (EPG) are blocked from output by the microprocessor 10. FIG. 4 illustrates an example of this type of program blocking.

Referring now to FIG. 4, the on-screen electronic program guide (EPG) of FIG. 3 with program blocking according to principles of the present invention is shown. In particular, FIG. 4 illustrates a situation where a program entitled *"Jag"* scheduled to be aired on CBS from 8:00 pm to 9:00 pm on 4/25/00 is blocked. That is, the program's title is removed from the electronic program guide (EPG), and the program's video and/or audio portions are blocked from output. According to another embodiment, the blocked program's title in the electronic program guide (EPG) may be substituted with a predetermined, non-descriptive legend such as *"No Title."* By blocking programs and removing blocked program titles from the on-screen electronic program guide (EPG), the present invention advantageously prevents children from viewing objectionable programs, and also prevents them from determining if and when blocked programs are being aired.

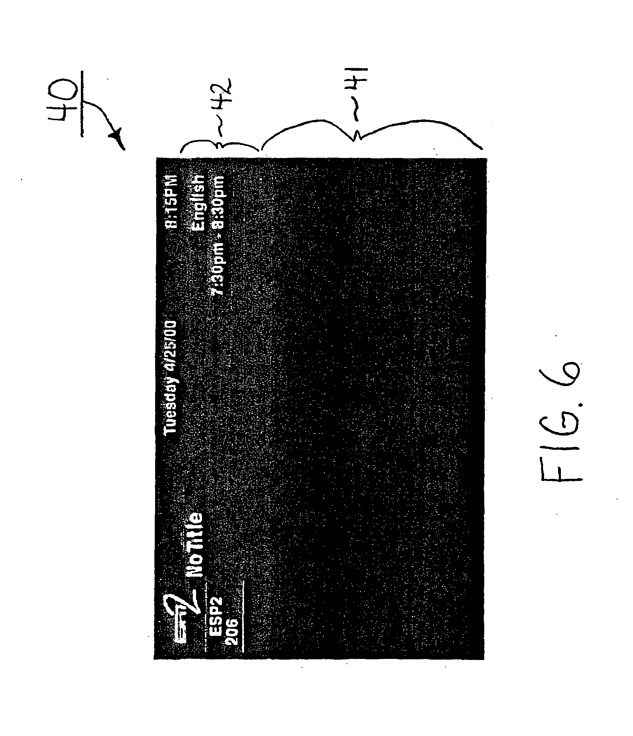

Referring back to FIG. 2, in the event that a user's input at step 21 requests display of a channel that is currently airing a program to be blocked, the microprocessor 10 performs step 25 by preventing display of the blocked program on the display terminal 18. Moreover, the microprocessor 10 may prevent output of the blocked program's audio. In situations where program-related OSD information such as channel banners are provided along with the video program in the displayed image, the microprocessor 10 may also prevent the blocked program's title from appearing on the channel banner, or provide a substitute legend. The aforementioned type of program blocking will hereinafter be described with reference to FIGS. 5 and 6.

Referring to FIG. 5, an exemplary display of a channel's program and an OSD of program-related information in the form of a channel banner is shown. In FIG. 5, a channel display 40 suitable for display on the display terminal 18 of FIG. 1 includes a video portion 41 and a channel banner portion 42. The video portion 41 illustrates a program currently being aired on the displayed channel. The channel banner portion 42 provides specific details regarding the displayed channel, i.e., the channel banner comprises an OSD of program-related information. In FIG. 5, a program entitled *"Moto Madness"* is being aired on ESPN 2 from 7:30 pm to 8:30 pm on 4/25/00.

Referring now to FIG. 6, the display 40 of FIG. 5 employing program blocking according to principles of the present invention is shown. In FIG. 6, the video portion 41 (and/or audio) are blocked and the blocked program title is removed from the channel banner portion 42. In particular, FIG. 6 illustrates an embodiment where the video portion 41 is blocked and the predetermined, non-descriptive legend *"No Title"* is substituted for the blocked program's title in the channel banner portion 42. That is, the program is blocked and information that is associated with a program and intended for display is modified for programs that a user has selected for blocking. According to another embodiment, the video portion 41 may display a predetermined message indicating that the program is not viewable and/or the channel banner portion 42 may include no legend for the blocked program's title. By blocking programs and removing blocked program titles from the channel banner portion 42, the present invention advantageously prevents children from viewing objectionable programs, and also prevents them from determining if and when blocked programs are being aired.

Referring back to FIG. 2, once a program is blocked at step 25, a user is provided an opportunity to remove the block at step 26. The program block may be removed, for example, by providing a predetermined input (e.g., a password) via the input terminal 19. If the user elects not to remove the program block, process flow loops back to step 25 and the program block is maintained. However, should the user choose to remove the program block at step 26, process flow advances to step 27 where the program block is removed. Once the block is removed, the applicable program may be viewed without restriction.

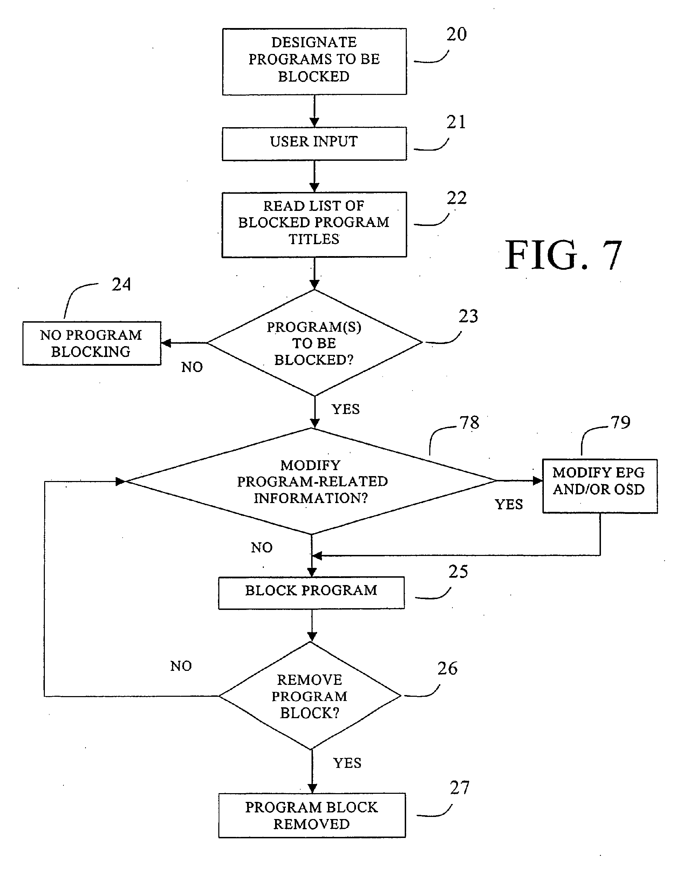

Another embodiment of the invention is shown in FIG. 7. In FIG. 7, steps 20, 21, 22, 23, 24, 25, 26 and 27 correspond, respectively, to like-numbered steps in FIG. 2 that are described above and will not be described again here. However, the embodiment illustrated in FIG. 7 also includes an aspect comprising steps 78 and 79. More specifically, if a user has identified programs to be blocked (steps 20, 21, and 22) then step 23 is followed by step 78 which determines whether a user has selected to modify program-related information in response to enabling of program blocking. That is, a user may be given the option to enable or disable modification of portions of an EPG or an OSD such as a channel banner that relate to a program to be blocked. Also, a user could be enabled to select or designate which program related information is to be modified (e.g., EPG only, channel banner only, EPG and channel banner, all program-related information displayed in any form, etc.) and/or which specific information is to be modified (e.g., title, rating, program description, etc., and whether all or a specific portion of one or more of any or all of these categories of program-related information (e.g., one or more words or phrases) is to be modified). Enabling a user to select or designate the desired options could occur by listing the options in an OSD setup menu from which a user chooses options using, for example, a remote control. The program blocking option selection process could occur as part of the user input process during step 21 in FIG. 7, for example. If modification of program-related information is enabled, step 78 is followed by step 79 during which the selected program-related information (EPG, OSD, etc.) is modified. If a user has disabled modification of program-related information, step 78 is followed by blocking of the video and/or audio programming at step 25. Step 79 is also followed by step 25.

As described herein, the present invention provides significant advantages over conventional parental control and program blocking techniques. Although the present invention has been described in relation to a television signal receiver, the invention is applicable to various systems, either with or without display devices, and the phrases "television signal receiver," "television system," or "video system" as used herein are intended to encompass various types of apparatuses and systems including, but not limited to, television sets or monitors that include a display device, and systems or apparatuses such as a set-top box, video tape recorder (VTR), digital versatile disk (DVD) player, video game box, or personal video recorder (PVR) that may not include display devices. Also, although the invention has been described in regard to electronic program guide (EPG) and channel banner forms of program-related information intended for display, the invention is applicable to any form of information that is intended for display and associated with a program. For example, such information may include title, program description, or rating information. The information may be derived from auxiliary information included in a television signal such as Extended Data Services (XDS) information or from other sources and displayed in various forms on a display device in response to channel changes or user activation of display-control features. In addition, modifying information intended for display as described herein may include modifying only one particular OSD form of information (e.g., EPG only), modifying multiple OSD forms of the information (e.g., EPG or channel banner or both), or modifying any and all OSD appearances of the information. Thus, a phrase such as "EPG or channel banner" as used herein is intended to encompass EPG only, channel banner only, or both.

Various other modifications of the described embodiments are also possible. For example, although FIG. 2 shows steps 25 and 28 occurring in a particular sequence, step 28 (modification of information that is intended for display and associated with a program) could occur after step 25. Alternatively, step 28 could occur substantially simultaneously with step 25. For example, a system incorporating principles of the invention could include a separate OSD processor operating in parallel with microprocessor 10 in FIG. 1 to generate and modify OSD information substantially simultaneously with video and audio program blocking controlled by microprocessor 10. In addition, step 25 and step 28 do not both have to occur. That is, a user may operate a video system to display program-related information, such as program schedule information in an EPG, find nothing of interest, and never activate display of a video program. In that case, blocking of video and audio programming (step 25) would not occur. Similarly, a user could select a channel directly by entering a channel number without activating display of program-related material such as an EPG. In that case, video and audio programming would be blocked as needed and modification of program-related information in the form of an EPG would not occur (i.e., step 28 would not occur in regard to an EPG; modification of other program-related OSD information such as a channel banner might occur.) Similar comments also apply to steps 75 and 78 in FIG. 7.

While this invention has been described as having a preferred design; the present invention can be further modified within the spirit and scope of this disclosure. This application is therefore intended to cover any variations, uses, of adaptations of the invention using its general principles. Further, this application is intended to cover such departures from the present disclosure as come within known or customary practice in the art to which this invention pertains and which fall within the limits of the appended claims.

## Claims

1. A method for enabling program blocking in a video system, comprising steps of:
enabling a user to designate a program to be blocked;
blocking the designated program by preventing display of a video portion of the program; and
modifying information associated with the designated program and intended for display.

2. The method of claim 1 wherein, the step of modifying information intended for display comprises the step of modifying a portion of an electronic program guide (EPG) associated with the program or a portion of a channel banner associated with the program.

3. The method of claim 2 wherein the step of modifying a portion of an EPG or the portion of a channel banner comprises the step of modifying program title information.

4. The method of claim 1 wherein the step of modifying information associated with the designated program is preceded by a step of enabling modification of the information associated with the designated program in response to an input by a user.

5. The method of claim 1 wherein the step of modifying information associated with the designated program is preceded by a step of enabling a user to designate a portion of the information associated with the designated program that is to be modified.

6. The method of claim 5 wherein the information associated with the designated program and intended for display comprises a portion of an electronic program guide (EPG) or a channel banner, and wherein the portion of the EPG or the channel banner comprises program title information.

7. A method for enabling program blocking in a video system, comprising steps of:
enabling a user to designate a title of a program to be blocked; and
blocking the program corresponding to the designated title by preventing display of a video portion of the program, and preventing display of the program title in an on-screen electronic program guide or channel banner of the video system.

8. The method of claim 7, wherein the step of blocking the program corresponding to the designated title further comprises preventing output of an audio portion of the program.

9. The method of claim 7, wherein the program title is substituted with a predetermined legend in the on-screen electronic program guide or channel banner.

10. A method for enabling program blocking in a video system, comprising steps of:
enabling a user to designate a program to be blocked;
enabling a user to designate a portion of program-related information intended for display;
blocking the designated program by preventing display of a video portion of the program; and
preventing display of the designated portion of program-related information in an electronic program guide (EPG) or a channel banner.

11. The method of claim 10, wherein the step of blocking the program corresponding to the designated title further comprises preventing output of an audio portion of the program.

12. The method of claim 10, wherein the designated portion of program-related information is replaced with a predetermined legend in the EPG or channel banner.

13. A system for enabling program blocking, comprising:
an input for receiving information from a user; and
a controller operating in response to the information from a user for enabling a user to designate at least a portion of a title of a program to be blocked, for preventing display of a video portion of a program corresponding to the designated portion of the title, and for preventing display of at least the portion of the program title in a given display region.

14. The system of claim 13, wherein the given display region is an on-screen electronic program guide.

15. The system of claim 13, wherein the given display region is a channel banner.

16. The system of claim 13, wherein the controller blocks the program corresponding to the designated title by preventing output of an audio portion of the program.

17. The system of claim 13, wherein the program title is substituted with a predetermined legend in the given display region.
